# FASCICULE DE BREVET EUROPEEN

(11) **EP 2 725 931 B1**
(45) Date de publication et mention de la délivrance du brevet: **29.07.2015**
(21) Numéro de dépôt: 12731103.3
(22) Date de dépôt: 04.06.2012
(51) Int. Cl.: A23P 1/00, A23P 1/08, A23L 1/00, B65D 85/72

(54) **ENSEMBLE ALIMENTAIRE ET SON PROCÉDÉ DE FABRICATION ET GABARIT POUR LA MISE EN UVRE DUDIT PROCÉDÉ**
LEBENSMITTELEINHEIT, HERSTELLUNGSVERFAHREN DAFÜR UND SCHABLONE ZUR DURCHFÜHRUNG DES VERFAHRENS
FOOD UNIT, METHOD FOR MANUFACTURING SAME, AND TEMPLATE FOR IMPLEMENTING SAID METHOD

(30) Priorité: 28.06.2011 FR 1155724
(43) Date de publication de la demande: 07.05.2014
(73) Titulaire: Les Crudettes, 45110 Chateauneuf sur Loire (FR)
(72) Inventeur: DELCOURT, Elise, 13300 Salon-de-Provence (FR)
(74) Mandataire: Godineau, Valérie
(86) Numéro de dépôt international: PCT/FR2012/051237
(87) Numéro de publication internationale: WO 2013/001197

(56) Documents cités:
- WO-A1-92/19504
- FR-A1- 2 940 749
- JP-A- 2005 245 414
- US-A1- 2005 271 776
- US-A1- 2007 237 862

## Description

La présente invention concerne un ensemble alimentaire du type comprenant un emballage de forme générale tubulaire et un produit alimentaire contenu dans ledit emballage, le procédé de fabrication dudit ensemble alimentaire et un gabarit pour la mise en oeuvre dudit procédé de fabrication.

Elle concerne plus particulièrement un ensemble alimentaire du type comprenant :
- un emballage de forme générale tubulaire
- un produit alimentaire contenu dans ledit emballage, ledit produit alimentaire comprenant une garniture sous forme de boudin et au moins une feuille végétale d'enrobage, de préférence de salade, maintenue enroulée autour de la garniture en formant un rouleau végétal autour de ladite garniture.

Un tel produit prêt à consommer est connu de l'état de la technique comme l'illustre le brevet FR-2.940.749. Dans ce brevet antérieur, les feuilles de salade sont maintenues à l'état enroulé autour de la garniture par une colle alimentaire. L'inconvénient d'une telle solution réside dans le temps de fabrication d'un tel produit lié notamment aux opérations d'encollage et de séchage de la colle. L'intérêt de cet encollage est d'assurer une belle présentation du produit et une consommation aisée de ce dernier.

D'autres ensembles ou emballages alimentaires sont connus également des documents JP 2005 245414, WO 92/19504, US 2007/237862 et US 2005/271776.

Un but de la présente invention est donc de proposer un ensemble alimentaire à base de feuilles végétales dont la conception permet un maintien et une présentation optimale du produit alimentaire au cours de sa consommation sans nuire au temps de fabrication de l'ensemble.

Un autre but de la présente invention est de proposer un ensemble alimentaire du type précité dont la conception permet un maintien en position de la ou des feuilles végétales à l'état enroulé autour de la garniture sans utilisation de colle.

A cet effet, l'invention a pour objet un ensemble alimentaire du type comprenant :
- un emballage de forme générale tubulaire
- un produit alimentaire contenu dans ledit emballage, ledit produit alimentaire comprenant une garniture sous forme de boudin et au moins une feuille végétale d'enrobage, de préférence de salade, maintenue enroulée autour de la garniture,
caractérisé en ce que ledit emballage, qui forme les moyens de maintien de ladite ou de chaque feuille végétale enroulée autour de ladite garniture, est un emballage souple de type sachet pour épouser le pourtour du corps allongé formé par le produit alimentaire disposé axialement à l'intérieur dudit emballage, cet emballage présentant au moins deux faces latérales opposées souples et un fond reliant les bords transversaux dits inférieurs des deux faces latérales, ces deux faces latérales étant assemblées l'une à l'autre par leurs bords, dits longitudinaux, de manière séparable l'une de l'autre sur au moins une partie de la longueur de leurs bords longitudinaux par traction exercée dans le sens d'un écartement desdites faces latérales, pour une mise à nu progressive sur tout son pourtour du corps allongé formé par le produit alimentaire à partir de son extrémité opposée audit fond.

Par emballage souple, on entend un emballage flexible apte à se plier facilement et à se déformer pour s'adapter aux formes du produit alimentaire, par opposition à un emballage rigide tel que, par exemple, une coque thermoformée comme cela est le cas dans l'état de la technique.

L'utilisation d'un emballage souple dimensionné et conformé pour épouser le contour du produit alimentaire permet l'utilisation de cet emballage comme un emballage de contention qui maintient la ou les feuilles végétales à l'état enroulé autour de la garniture.

Par ailleurs, la réalisation de cet emballage sous forme d'un emballage pelable, c'est-à-dire dont les faces latérales sont progressivement séparables par voie sèche au niveau de leurs bords longitudinaux en s'écartant l'une de l'autre par traction exercée sur lesdites faces latérales dans le sens d'un écartement, sans déchirure ou rupture desdites faces, cette traction s'opérant au niveau des bords transversaux supérieurs dudit emballage pour permettre une séparation progressive des faces latérales au niveau de leurs bords longitudinaux depuis le bord transversal supérieur en direction du bord transversal inférieur permet à la partie non encore pelée de l'emballage de maintenir la ou les feuilles végétales d'enrobage à l'état enroulé autour de la garniture pendant que la partie pelée permet une consommation aisée du produit entièrement dégagé sur la totalité de son pourtour. Un tel ensemble permet donc la consommation du produit alimentaire à la manière d'un sandwich en mordant dans ledit produit alimentaire depuis une extrémité du produit alimentaire en direction de l'autre extrémité du produit alimentaire sans voir la ou les feuilles d'enrobage se dérouler de la garniture.

De préférence, l'emballage est un emballage fermé apte à être ouvert pour la consommation du produit alimentaire et les bords transversaux, dits supérieurs, des deux faces latérales de l'emballage, opposés aux bords transversaux inférieurs, sont, à l'état fermé dudit emballage, solidarisés l'un à l'autre dans une zone de liaison.

En effet, bien que l'emballage puisse être un emballage présentant une ouverture permanente ménagée à l'opposé du fond de l'emballage, de préférence l'emballage est un emballage fermé, ouvert au moment de la consommation du produit alimentaire. L'état fermé de l'emballage permet de faciliter la conservation du produit alimentaire, et le stockage et le transport de l'ensemble.

De préférence, la zone de liaison des bords transversaux supérieurs des deux faces latérales de l'emballage est écartée de la rive desdits bords pour ménager, entre rives et zone de liaison, une zone de préhension dans laquelle les faces latérales sont aptes à être saisies individuellement.

Cette zone de préhension permet ainsi, dans un premier temps, par traction exercée dans le sens d'un écartement sur les faces latérales saisies au niveau de ladite zone, d'ouvrir l'emballage au niveau de son bord transversal supérieur avant de poursuivre l'ouverture de l'emballage au niveau des bords longitudinaux de l'emballage par séparation progressive desdits bords longitudinaux au fur et à mesure de la traction. En effet, les bords transversaux supérieurs des deux faces latérales de l'emballage sont, à l'état fermé dudit emballage, solidarisés l'un à l'autre, de manière séparable, pour un passage de l'état fermé à l'état ouvert, par simple traction exercée sur les faces latérales dans le sens d'un écartement desdites faces latérales.

Il est également possible d'assurer l'ouverture de l'emballage par découpage et enlèvement de la partie supérieure de l'emballage ou par déchirure de la partie supérieure de l'emballage sans sortir du cadre de l'invention.

De préférence, le bord longitudinal de chaque face latérale est solidarisé au bord longitudinal de la face latérale en regard par une soudure, ladite soudure étant, de préférence, une soudure continue se développant le long d'une ligne sensiblement parallèle à l'axe longitudinal de l'emballage. La ou chaque soudure est une soudure apte à lâcher ou à se rompre sous l'effet d'un effort de traction de valeur prédéterminée exercé sur les faces latérales de l'emballage dans le sens d'un écartement desdites faces latérales. Cette valeur de l'effort de traction, nécessaire à la rupture de la soudure, est généralement déterminée empiriquement en fonction de la clientèle visée.

De préférence, la ou au moins l'une des feuille(s) végétale(s) d'enrobage est une feuille de salade de batavia, de préférence de dimensions comprises entre 12x12cm et 18x18cm. L'utilisation de batavia permet l'obtention de feuilles végétales de grandes dimensions. En outre, les feuilles de batavia sont des feuilles suffisamment souples pour ne pas casser et bien enrouler la garniture, ces feuilles de batavia ne présentant pas trop de côtes cassantes. Enfin, le goût de la batavia est doux afin de mettre en valeur le goût de la garniture.

L'invention a encore pour objet un procédé de déconditionnement d'un ensemble alimentaire du type précité, ledit procédé comprenant au moins une étape de traction des faces latérales opposées de l'emballage dans le sens d'un écartement desdites faces, ladite traction s'opérant en débutant au niveau du bord transversal supérieur dudit emballage correspondant à l'extrémité de l'emballage opposée audit fond pour permettre une séparation progressive des faces latérales au niveau de leurs bords longitudinaux depuis le bord transversal supérieur en direction du bord transversal inférieur dudit emballage ou en d'autres termes, depuis l'extrémité de l'emballage opposée audit fond en direction dudit fond.

L'invention a encore pour objet un procédé de fabrication d'un ensemble alimentaire du type précité, à l'aide d'un emballage préfabriqué, ledit procédé comprenant au moins une étape de préparation du produit alimentaire et une étape de remplissage de l'emballage avec le produit alimentaire pré-préparé, caractérisé en ce que, au cours de l'étape de préparation du produit alimentaire, on dispose la garniture pré-conformée en boudin et la ou chaque feuille végétale d'enrobage dans un gabarit se présentant sous forme d'un corps tubulaire ouvert à chacune de ses extrémités de sorte que la ou chaque feuille végétale d'enrobage est, à l'intérieur du gabarit, enroulée autour de la garniture, et en ce qu'au cours de l'étape de remplissage de l'emballage avec le produit alimentaire pré-préparé, on introduit axialement le gabarit dans l'emballage et en ce qu'on maintient à l'aide d'un pousseur le contenu du gabarit à l'intérieur de l'emballage parallèlement au retrait du gabarit de l'emballage.

De préférence, le procédé comprend, après remplissage, une étape de fermeture de l'emballage par solidarisation entre eux des bords transversaux supérieurs de l'emballage, au voisinage de la rive desdits bords, pour ménager entre rives et zone de solidarisation, une zone de préhension individuelle des faces latérales de l'emballage.

L'invention a encore pour objet un gabarit pour la mise en oeuvre du procédé de fabrication du type précité, caractérisé en ce que ledit gabarit se présente sous forme d'un corps tubulaire ouvert à chacune de ses extrémités, la paroi périphérique dudit corps étant formée d'au moins deux parties mobiles l'une par rapport à l'autre pour permettre le passage de ladite paroi d'une configuration fermée à une configuration ouverte dans laquelle elle ménage une ouverture d'accès à l'intérieur du corps de gabarit pour faciliter le remplissage dudit corps de gabarit.

L'invention sera bien comprise à la lecture de la description suivante d'exemples de réalisation, en référence aux dessins annexés dans lesquels :
la figure 1 représente une vue en perspective de manière schématique d'un ensemble alimentaire conforme à l'invention après séparation sur une partie de la longueur de leurs bords longitudinaux des faces latérales dudit emballage ;
la figure 2 représente une vue en perspective de manière schématique d'un ensemble conforme à l'invention à l'état fermé de l'emballage ;
les figures 3 à 11 représentent des vues schématiques en perspective des différentes étapes nécessaires à la fabrication d'un ensemble alimentaire conforme à l'invention.

Comme mentionné ci-dessus, l'invention a pour objet un ensemble alimentaire du type comprenant :
- un emballage 1 de forme générale tubulaire
- un produit 2 alimentaire contenu dans ledit emballage 1, ledit produit 2 alimentaire comprenant une garniture 3 sous forme de boudin et au moins une feuille 4 végétale d'enrobage, de préférence de salade, et des moyens de maintien de la au moins une feuille 4 végétale à l'état enroulé autour de la garniture 3.

De manière caractéristique à l'invention, les moyens de maintien de ladite ou de chaque feuille végétale à l'état enroulé autour de ladite garniture, sont formés par l'emballage qui est un emballage souple de type sachet pour épouser le pourtour du corps allongé formé par le produit 2 alimentaire disposé axialement à l'intérieur dudit emballage 1. Cet emballage 1 présente au moins deux faces 5 latérales opposées souples et un fond 6 reliant les bords 7 transversaux dits inférieurs des deux faces 5 latérales. Ces deux faces 5 latérales sont assemblées l'une à l'autre par leurs bords 9, dits longitudinaux, de manière séparable l'une de l'autre, sur au moins une partie de la longueur de leurs bords 9 longitudinaux, par traction exercée dans le sens d'un écartement desdites faces 5 latérales, pour une mise à nu progressive sur tout son pourtour du corps allongé formé par le produit 2 alimentaire depuis une extrémité dudit corps allongé en direction de l'extrémité opposée dudit corps allongé.

Le produit alimentaire est destiné à être consommé à la manière d'un sandwich en mordant dans ledit corps allongé formant le produit alimentaire depuis une extrémité dudit corps en direction de l'autre extrémité dudit corps. Grâce à son emballage, ce produit alimentaire peut être consommé sans risque de souillure.

Généralement, le bord 9 longitudinal de chaque face 5 latérale est solidarisé au bord 9 longitudinal de la face 5 latérale en regard par une soudure 13, ladite soudure 13 étant, de préférence, une soudure continue se développant le long d'une ligne sensiblement parallèle à l'axe longitudinal de l'emballage 1. La face interne des faces 5 latérales opposées de l'emballage est en un matériau thermo-soudable, de préférence en polyéthylène. Les faces 5 latérales opposées de l'emballage 1 se présentent sous forme d'un film ou d'un matériau en feuille monocouche ou multicouche conférant auxdites faces leur souplesse.

Dans le mode de réalisation représenté, l'emballage est un emballage en un matériau en feuille, confectionné par soudure et découpage, qui présente deux faces latérales opposées et un fond reliant les deux faces, le fond étant replié pour réaliser avec les deux faces une configuration en W (vue en coupe verticale). Deux soudures 13 latérales s'étendent sur toute la hauteur des deux faces, y compris dans la région du fond de l'emballage pour assembler ces faces entre elles. Des soudures en lignes brisées ou curvilignes dont les points de départ sont situés sur les soudures latérales à proximité du repli médian du W assemblent chaque face avec la zone du fond située en vis-à-vis. Le matériau constitutif de l'emballage est un matériau multicouche formé, depuis l'extérieur en direction de l'intérieur de l'emballage, d'une couche de papier, d'une couche de polypropylène et d'une couche de polyéthylène. Ces couches sont assemblées entre elles par collage ou thermo-soudage. La couche externe en papier opaque ou translucide est une couche discontinue pour ménager une fenêtre 14 de visualisation du contenu de l'emballage. Le fond de l'emballage est donc un fond à soufflet, de préférence avec une configuration en W. Ce W est aplati pour un stockage à plat avant remplissage. La présence d'un tel soufflet permet, en position ouverte du W, un maintien en position dressée de l'emballage reposant sur le fond, en particulier à l'état rempli de l'emballage. Ce fond conformé en soufflet de l'emballage donne donc une rigidité protectrice du produit alimentaire et la forme tubulaire conférée à l'emballage évite de trop écraser le produit alimentaire sans nuire à l'effet de contention dudit emballage. Cet emballage 1 peut être un emballage fermé ou ouvert à son extrémité opposée à celle formant fond. L'extrémité de l'emballage opposée à l'extrémité formant fond est dans tous les cas l'extrémité par laquelle le produit alimentaire est destiné à être introduit dans l'emballage au moment de la fabrication dudit ensemble. Dans le cas d'un emballage ouvert de manière permanente, les faces 5 latérales de l'emballage 1 ne sont pas solidarisées l'une à l'autre au niveau du bord 8 transversal supérieur desdites faces de sorte que l'espace ménagé entre lesdites faces 5 latérales est un espace ouvert de manière permanente, l'ouverture servant d'ouverture d'introduction du produit alimentaire à l'intérieur de l'emballage au moment de la fabrication de l'ensemble alimentaire.

Dans le cas conforme aux figures d'un emballage 1 fermé, apte à être ouvert pour la consommation du produit 2 alimentaire, les bords 8 transversaux dits supérieurs des deux faces 5 latérales de l'emballage, opposés aux bords 7 transversaux inférieurs, sont, à l'état fermé dudit emballage, solidarisés l'un à l'autre.

Généralement, la zone 12 de liaison des bords 8 transversaux supérieurs des deux faces 5 latérales de l'emballage 1 est écartée de la rive 11 desdits bords 8 pour ménager, entre rives 11 et zone 12 de liaison, une zone 10 de préhension dans laquelle les faces 5 latérales sont aptes à être saisies individuellement. Le rôle de cette zone de préhension sera décrit ci-après.

De préférence, les bords 8 transversaux supérieurs des deux faces 5 latérales de l'emballage, qui, à l'état fermé dudit emballage 1, sont solidarisés l'un à l'autre, sont, à l'état ouvert dudit emballage 1, désolidarisés l'un de l'autre. Pour permettre une telle désolidarisation, lesdits bords 8 transversaux supérieurs sont solidarisables de manière séparable, pour un passage de l'état fermé à l'état ouvert, par simple traction exercée sur les faces 5 latérales dans le sens d'un écartement desdites faces latérales 5.

Il est ainsi possible, à l'aide d'un effort de traction, d'ouvrir l'emballage 1 puis d'assurer un écartement progressif desdites faces 5 latérales par rupture progressive des soudures liant les bords longitudinaux des faces latérales entre elles. Comme mentionné ci-dessus, cet effort de traction, nécessaire à la rupture, des soudures est défini empiriquement en fonction de la population de consommateurs visée. Les paramètres influant sur cet effort de traction sont principalement les dimensions des plages de scellage, la température et la durée de chauffage pour la réalisation de la soudure, la nature du matériau thermo-soudable.

Dans les exemples représentés, le matériau thermo-soudable est un film polyéthylène coextrudé présentant une épaisseur comprise entre 20 et 180 µm. Les films commercialisés par la Société ALCAN sous la référence 267 (produit CXLMS11) fournissent d'excellents résultats.

Les faces internes en polyéthylène des faces latérales sont soudées à une température comprise entre 135 et 155°C pendant une durée comprise entre 0,2 et 0,4 s sur une largeur comprise entre 3 et 10 mm

Ce mode de réalisation est considéré comme donnant satisfaction eu égard à la population de consommateurs visée et des efforts de traction moyens susceptibles d'être fournis par une telle population.

Le produit alimentaire est formé d'une garniture 3 et d'au moins une feuille 4 végétale d'enrobage. La garniture comprend généralement au moins de la semoule et du fromage frais. A titre d'exemple, la garniture peut comprendre de la semoule nature, une sauce au fromage frais nature, un assaisonnement, tel que des herbes aromatiques, de l'ail, des épices, de la moutarde, etc., des marquants à base de légumes, tels que des tomates, des concombres, des poivrons, des marquants protéiques, tels que du fromage, de la viande ou du poisson. Les ingrédients de la garniture peuvent être des ingrédients surgelés, frais ou autre.

Les ingrédients de la garniture sont mélangés et introduits dans un poussoir pour former un boudin de longueur généralement comprise entre 13 cm et 17 cm, de préférence voisin de 15 cm, d'un diamètre compris entre 2 cm et 4 cm, de préférence voisin de 3 cm, et d'un poids compris entre 120 g et 150 g, de préférence voisin de 135 g.

Comme mentionné ci-dessus, la ou au moins l'une des feuille(s) 4 végétale(s) d'enrobage est une feuille de salade de batavia, de préférence de dimensions comprises entre 12x12cm et 18x18cm.

Les feuilles de salade sont mises quasiment entières dans le produit sous leur forme naturelle. Généralement, on utilise deux à trois feuilles de salade, soit entre 30 et 80 g de salade pour un poids total de l'ensemble compris entre 150 g et 200 g.

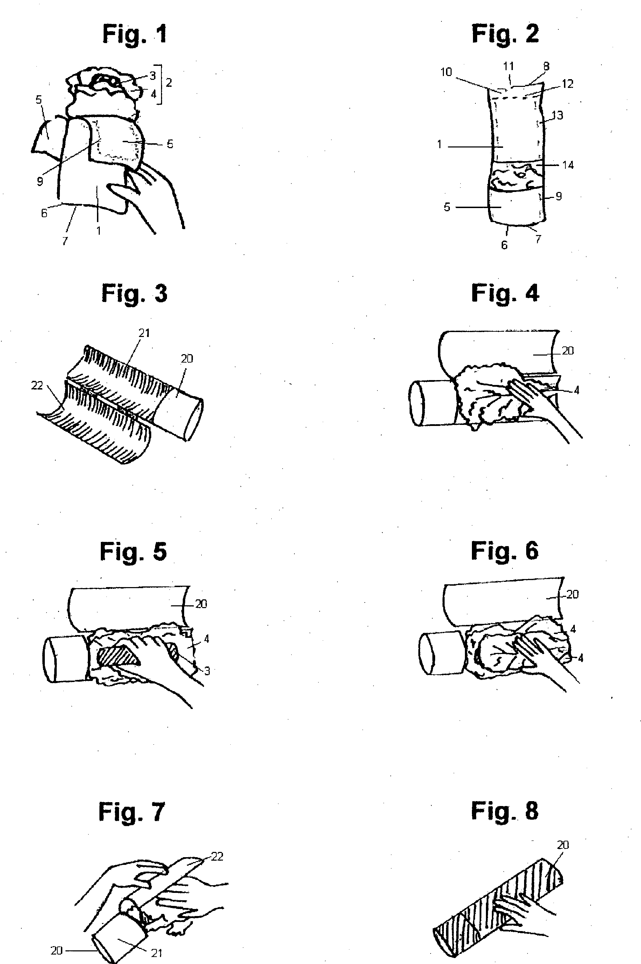

Pour la fabrication d'un tel ensemble, on peut procéder comme l'illustrent les figures 3 à 11. Pour cette fabrication, on utilise un gabarit 20 qui se présente sous forme d'un corps tubulaire ouvert à chacune de ses extrémités, la paroi périphérique de délimitation dudit corps étant formée d'au moins deux parties 21, 22 mobiles l'une par rapport à l'autre pour permettre le passage de ladite paroi d'une configuration fermée à une configuration ouverte dans laquelle elle ménage une ouverture d'accès à l'intérieur du corps de gabarit pour faciliter le remplissage dudit corps de gabarit.

Dans l'exemple représenté, l'une des parties mobiles affecte la forme d'un volet courbe relié à l'autre partie mobile par une liaison pivot d'axe parallèle à l'axe longitudinal du gabarit pour un passage, par déplacement à pivotement du volet, de la position fermée à la position ouverte ou inversement de ladite paroi périphérique. Ce volet ne s'étend que sur une partie de la longueur du gabarit.

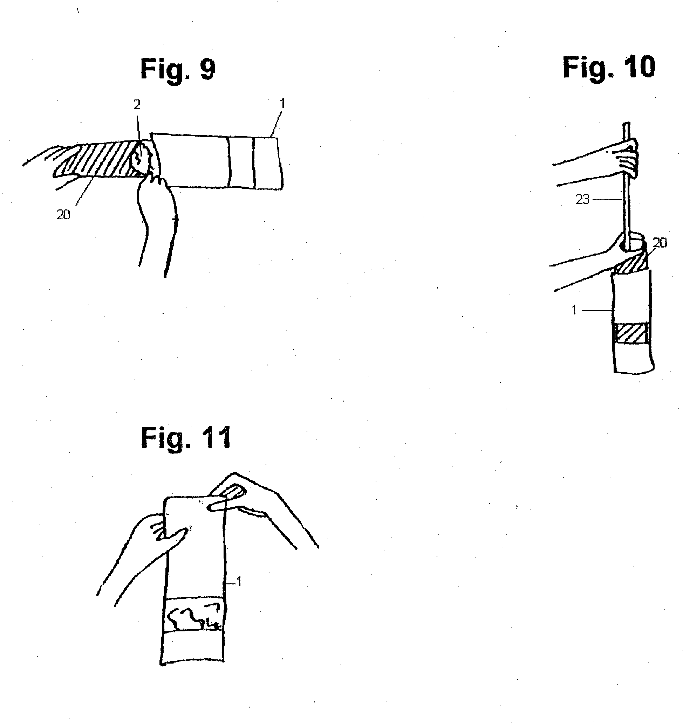

On procède dans un premier temps en un remplissage du gabarit en produit alimentaire. A cet effet, on ouvre le volet, on introduit dans le gabarit la garniture en déposant dans un premier temps une ou plusieurs feuilles de salade au fond du gabarit puis le boudin préformé de garniture que l'on peut recouvrir d'une dernière feuille de salade. L'opérateur maintient manuellement les feuilles de salade à l'état enroulé en formant un rouleau autour de la garniture au cours de la fermeture du gabarit comme l'illustre la figure 7. Le gabarit est ensuite introduit dans l'emballage de type sachet muni d'une ouverture à l'extrémité du sachet opposée à celle formant fond. L'opérateur agit ensuite sur le contenu du gabarit à l'aide d'un pousseur, c'est-à-dire par exemple à l'aide d'une tige munie d'une platine formant tête de piston, ou à l'aide d'un corps plein allongé ladite tête de piston ou l'extrémité dudit corps agissant sur l'extrémité restant accessible du gabarit. Cette tête de piston est appliquée sur l'extrémité du produit alimentaire logé à l'intérieur du gabarit pendant que l'opérateur extrait en parallèle le gabarit de l'emballage comme l'illustre la figure 10. L'emballage peut ensuite être fermé à l'aide d'une soudure transversale ou maintenu ouvert jusqu'à consommation du produit alimentaire.

Pour permettre la consommation du produit alimentaire, le consommateur saisit les faces latérales de l'emballage au niveau des bords transversaux supérieurs des faces latérales dudit emballage dans la zone 10 de préhension desdites faces pour exercer, sur ces dernières, une force de traction en vue d'un écartement progressif des faces latérales par rupture progressive des soudures reliant les bords longitudinaux des faces latérales entre eux. Dans le cas où l'emballage est du type fermé par une soudure transversale, au cours de cette traction, la soudure transversale est dans un premier temps rompue. Cet écartement progressif sans déchirure des faces latérales à la manière d'un pelage assure une mise à nu progressive du produit alimentaire qui se trouve accessible sur tout son pourtour. La partie non encore mise à nu ou pelée du produit alimentaire est maintenue en forme par l'emballage qui permet, parallèlement à la consommation de la partie découverte du produit alimentaire, le maintien d'une partie du produit alimentaire à l'état conformé. Le consommateur peut ainsi manger le produit alimentaire à la manière d'un sandwich en ouvrant progressivement l'emballage avec la garantie que le produit alimentaire se tiendra et qu'il ne tombera pas au cours de la consommation.

Il en résulte la possibilité de consommer un produit à base de feuilles végétales pour l'obtention d'une alimentation équilibrée sans avoir notamment à coller les feuilles végétales pour le maintien d'une présentation acceptable par le consommateur au fur et à mesure de la consommation.

Dans le cas où l'ensemble est un ensemble alimentaire avec un emballage fermé préalablement à la consommation, l'ouverture de l'emballage peut également se faire par un autre moyen que par rupture de la soudure transversale, notamment par découpe de l'extrémité supérieure dudit emballage ou déchirure de cette extrémité supérieure sans sortir du cadre de l'invention.

## Revendications

1. Ensemble alimentaire du type comprenant :
- un emballage (1) de forme générale tubulaire
- un produit (2) alimentaire contenu dans ledit emballage (1), ledit produit (2) alimentaire comprenant une garniture (3) sous forme de boudin et au moins une feuille (4) végétale d'enrobage, de préférence de salade, maintenue enroulée autour de la garniture (3),
**caractérisé en ce que** ledit emballage (1), qui forme les moyens de maintien de ladite ou de chaque feuille végétale enroulée autour de ladite garniture, est un emballage souple de type sachet pour épouser le pourtour du corps allongé formé par le produit (2) alimentaire disposé axialement à l'intérieur dudit emballage (1), cet emballage (1) présentant au moins deux faces (5) latérales opposées souples et un fond (6) reliant les bords (7) transversaux dits inférieurs des deux faces (5) latérales, ces deux faces (5) latérales étant assemblées l'une à l'autre par leurs bords (9), dits longitudinaux, de manière séparable l'une de l'autre sur au moins une partie de la longueur de leurs bords (9) longitudinaux par traction exercée dans le sens d'un écartement desdites faces (5) latérales, pour une mise à nu progressive sur tout son pourtour du corps allongé formé par le produit (2) alimentaire à partir de son extrémité opposée audit fond.

2. Ensemble alimentaire selon la revendication 1,
**caractérisé en ce que** l'emballage (1) est un emballage fermé apte à être ouvert pour la consommation du produit (2) alimentaire et **en ce que** les bords (8) transversaux, dit supérieurs, des deux faces (5) latérales de l'emballage, opposés aux bords (7) transversaux inférieurs, sont, à l'état fermé dudit emballage, solidarisés l'un à l'autre dans une zone (12) de liaison.

3. Ensemble alimentaire selon la revendication 2,
**caractérisé en ce que** la zone (12) de liaison des bords (8) transversaux supérieurs des deux faces (5) latérales de l'emballage (1) est écartée de la rive (11) desdits bords (8) pour ménager, entre rives (11) et zone (12) de liaison, une zone (10) de préhension dans laquelle les faces (5) latérales sont aptes à être saisies individuellement.

4. Ensemble alimentaire selon l'une des revendications 2 ou 3,
**caractérisé en ce que** les bords (8) transversaux supérieurs des deux faces (5) latérales de l'emballage sont, à l'état fermé dudit emballage (1), solidarisés l'un à l'autre, de manière séparable, pour un passage de l'état fermé à l'état ouvert, par simple traction exercée sur les faces (5) latérales de l'emballage dans le sens d'un écartement desdites faces latérales (5).

5. Ensemble alimentaire selon l'une des revendications précédentes, **caractérisé en ce que** le bord (9) longitudinal de chaque face (5) latérale est solidarisé au bord (9) longitudinal de la face (5) latérale en regard par une soudure (13), ladite soudure (13) étant, de préférence, une soudure continue se développant le long d'une ligne sensiblement parallèle à l'axe longitudinal de l'emballage (1).

6. Ensemble alimentaire selon l'une des revendications précédentes, **caractérisé en ce que** la face interne des faces (5) latérales opposées de l'emballage (1) est en un matériau thermo-soudable, de préférence en polyéthylène.

7. Ensemble alimentaire selon l'une des revendications précédentes, **caractérisé en ce que** les faces (5) latérales opposées de l'emballage (1) se présentent sous forme d'un film ou d'un matériau en feuille monocouche ou multicouche.

8. Ensemble alimentaire selon l'une des revendications précédentes, **caractérisé en ce que** la ou au moins l'une des feuille(s) (4) végétale(s) d'enrobage est une feuille de salade de batavia, de préférence de dimensions comprises entre 12x12cm et 18x18cm.

9. Procédé de fabrication d'un ensemble alimentaire conforme à l'une des revendications 1 à 8, à l'aide d'un emballage (1) préfabriqué, ledit procédé comprenant au moins une étape de préparation du produit (2) alimentaire et une étape de remplissage de l'emballage (1) avec le produit (2) alimentaire pré-préparé,
**caractérisé en ce que**, au cours de l'étape de préparation du produit (2) alimentaire, on dispose la garniture (3) pré-conformée en boudin et la ou chaque feuille (4) végétale d'enrobage dans un gabarit (20) se présentant sous forme d'un corps tubulaire ouvert à chacune de ses extrémités de sorte que la ou chaque feuille (4) végétale d'enrobage est, à l'intérieur du gabarit (20), enroulée autour de la garniture (3), et **en ce qu'**au cours de l'étape de remplissage de l'emballage (1) avec le produit (2) alimentaire pré-préparé, on introduit axialement le gabarit (20) dans l'emballage (1) et **en ce qu'**on maintient à l'aide d'un pousseur (23) le contenu du gabarit (20) à l'intérieur de l'emballage (1) parallèlement au retrait du gabarit (20) de l'emballage (1).

10. Procédé selon la revendication 9, **caractérisé en ce qu'**il comprend, après remplissage, une étape de fermeture de l'emballage (1) par solidarisation entre eux des bords (8) transversaux supérieurs de l'emballage, au voisinage de la rive (11) desdits bords (8), pour ménager entre rives (11) et zone (12) de solidarisation, une zone (10) de préhension individuelle des faces (5) latérales de l'emballage.

11. Gabarit (20) pour la mise en oeuvre du procédé de fabrication conforme à l'une des revendications 9 ou 10, **caractérisé en ce que** ledit gabarit (20) se présente sous forme d'un corps tubulaire ouvert à chacune de ses extrémités, la paroi périphérique dudit corps étant formée d'au moins deux parties (21, 22) mobiles l'une par rapport à l'autre pour permettre le passage de ladite paroi d'une configuration fermée à une configuration ouverte dans laquelle elle ménage une ouverture d'accès à l'intérieur du corps de gabarit pour faciliter le remplissage dudit corps de gabarit.

## Patentansprüche

1. Lebensmitteleinheit des Typs, umfassend:
- eine allgemein rohrförmige Verpackung (1),
- ein in der Verpackung (1) enthaltenes Lebensmittelprodukt (2), wobei das Lebensmittelprodukt (2) eine Einlage (3) in Wurstform und mindestens ein pflanzliches Ummantelungsblatt (4), vorzugsweise ein Salatblatt, umfasst, das um die Einlage (3) gewickelt gehalten wird,
**dadurch gekennzeichnet, dass** die Verpackung (1), die die Haltemittel des oder jedes um die Einlage gewickelten pflanzlichen Blatts bildet, eine elastische Verpackung vom Typ Tüte ist, um am Umfang des von dem Lebensmittelprodukt (2) gebildeten länglichen Körpers anzuliegen, der axial im Innern der Verpackung (1) angeordnet ist, wobei diese Verpackung (1) mindestens zwei elastische gegenüberliegende Seitenfläche (5) und einen Boden (6) aufweist, der die unteren transversalen Ränder (7) der zwei Seitenflächen (5) verbindet, wobei diese zwei Seitenflächen (5) durch ihre Längsränder (9) über mindestens einen Abschnitt der Länge ihrer Längsränder (9) durch Zug, der in Richtung einer Beabstandung der Seitenflächen (5) ausgeübt wird, trennbar miteinander verbunden sind, um den von dem Lebensmittelprodukt (2) gebildeten länglichen Körper ab seinem dem Boden gegenüberliegenden Ende schrittweise über seinen gesamten Umfang freizugeben.

2. Lebensmitteleinheit nach Anspruch 1,
**dadurch gekennzeichnet, dass** die Verpackung (1) eine geschlossene Verpackung ist, die für den Verzehr des Lebensmittelprodukts (2) öffenbar ist und dass die oberen transversalen Ränder (8) der zwei Seitenflächen (5) der Verpackung, die den unteren transversalen Rändern (7) gegenüberliegen, im geschlossenen Zustand der Verpackung in einem Verbindungsbereich (12) miteinander verbunden sind.

3. Lebensmitteleinheit nach Anspruch 2,
**dadurch gekennzeichnet, dass** der Verbindungsbereich (12) der oberen transversalen Ränder (8) der zwei Seitenflächen (5) der Verpackung (1) von der Kante (11) der Ränder (8) beabstandet ist, um zwischen Kanten (11) und Verbindungsbereich (12) einen Griffbereich (10) zu bilden, in dem die Seitenflächen (5) individuell erfassbar sind.

4. Lebensmitteleinheit nach einem der Ansprüche 2 oder 3,
**dadurch gekennzeichnet, dass** die oberen transversalen Ränder (8) der zwei Seitenflächen (5) der Verpackung im geschlossenen Zustand der Verpackung (1) für den Übergang vom geschlossenen Zustand in den geöffneten Zustand durch einfachen Zug, der auf die Seitenflächen (5) der Verpackung in die Richtung einer Beabstandung der Seitenflächen (5) ausgeübt wird, trennbar miteinander fest verbunden sind.

5. Lebensmitteleinheit nach einem der vorangehenden Ansprüche,
**dadurch gekennzeichnet, dass** der Längsrand (9) jeder Seitenfläche (5) mit dem Längsrand (9) der gegenüberliegenden Seitenfläche (5) durch eine Schweißnaht (13) fest verbunden ist, wobei die Schweißnaht (13) vorzugsweise eine kontinuierliche Schweißnaht ist, die sich entlang einer zur Längsachse der Verpackung (1) etwa parallelen Linie entwickelt.

6. Lebensmitteleinheit nach einem der vorangehenden Ansprüche,
**dadurch gekennzeichnet, dass** die Innenseite der gegenüberliegenden Seitenflächen (5) der Verpackung (1) aus einem thermisch schweißbaren Material, vorzugsweise aus Polyethylen, ist.

7. Lebensmitteleinheit nach einem der vorangehenden Ansprüche,
**dadurch gekennzeichnet, dass** die gegenüberliegenden Seitenflächen (5) der Verpackung (1) in Form einer Folie oder eines Materials aus einer einschichtigen oder mehrschichtigen Folie vorliegen.

8. Lebensmitteleinheit nach einem der vorangehenden Ansprüche,
**dadurch gekennzeichnet, dass** das oder mindestens eines der pflanzlichen Ummantelungsblätter (4) ein Bataviasalatblatt, vorzugsweise der Abmessungen zwischen 12 x 12 cm und 18 x 18 cm inklusive, ist.

9. Herstellungsverfahren einer Lebensmitteleinheit nach einem der Ansprüche 1 bis 8 mit Hilfe einer vorgefertigten Verpackung (1), wobei das Verfahren mindestens einen Zubereitungsschritt des Lebensmittelprodukts (2) und einen Befüllungsschritt der Verpackung (1) mit dem vorbereitend zubereiteten Lebensmittelprodukt (2) umfasst,
**dadurch gekennzeichnet, dass** während des Zubereitungsschritts des Lebensmittelprodukt (2) die als Wurst vorbereitend ausgebildete Einlage (3) und das oder jedes pflanzliche Ummantelungsblatt (4) in einer Schablone (20) in Form eines an jedem seiner Enden geöffneten rohrförmigen Körpers derart angeordnet wird, dass das oder jedes pflanzlichen Ummantelungsblatt (4) im Innern der Schablone (20) um die Einlage (3) gewickelt wird und dass während des Befüllungsschritts der Verpackung (1) mit dem vorbereitend zubereiteten Lebensmittelprodukt (2) die Schablone (20) axial in die Verpackung (1) eingeführt wird und dass der Inhalt der Schablone (20) mit Hilfe eines Schiebers (23) im Innern der Verpackung (1) parallel zum Rückzug der Schablone (20) aus der Verpackung (1) gehalten wird.

10. Verfahren nach Anspruch 9, **dadurch gekennzeichnet, dass** es nach dem Befüllen einen Verschlussschritt der Verpackung (1) durch festes Verbinden der zwei oberen transversalen Ränder (8) der Verpackung miteinander in der Nähe der Kante (11) der Ränder (8) umfasst, um zwischen Kanten (11) und festem Verbindungsbereich (12) einen individuellen Griffbereich (10) der Seitenflächen (5) der Verpackung auszubilden.

11. Schablone (20) für die Umsetzung eines Herstellungsverfahrens nach einem der Ansprüche 9 oder 10, **dadurch gekennzeichnet, dass** die Schablone (20) die Form eines an jedem seiner Enden geöffneten rohrförmigen Körpers hat, wobei die Umfangswand des Körpers von mindestens zwei zueinander bewegbaren Abschnitten (21, 22) gebildet ist, um den Übergang der Wand von einer geschlossenen Konfiguration in eine geöffnete Konfiguration zu erlauben, in welcher sie eine Zugangsöffnung in das Innere des Schablonenkörpers ausbildet, um das Befüllen des Schablonenkörpers zu erleichtern.

## Claims

1. A food assembly of the type comprising:
- a generally tubular wrapper (1)
- a food product (2) contained in said wrapper (1), said food product (2) comprising a garnish (3) in the form of a roll and at least one covering plant leaf (4), preferably lettuce, kept wound around the garnish (3),
**characterized in that** said wrapper (1), which forms the means for keeping the or each plant leaf wound around said garnish, is a flexible wrapper of the pouch type to hug the perimeter of the elongated body formed by the food product (2) arranged axially inside said wrapper (1), that wrapper (1) having at least two opposite flexible side faces (5) and a bottom (6) connecting the so-called lower transverse edges (7) of the two side faces (5), said two side faces (5) being assembled to one another by their so-called longitudinal edges (9), so as to be able to be separated from one another over at least part of the length of their longitudinal edges (9) by traction exerted in the direction separating said side faces (5), to progressively expose, over its entire perimeter, the elongated body formed by the food product (2) from its end opposite said body.

2. The food assembly according to claim 1,
**characterized in that** the wrapper (1) is a closed wrapper able to be opened to consume the food product (2) and **in that** the so-called upper transverse edges (8) of the two side faces (5) of the wrapper, opposite the lower transverse edges (7), are, in the closed state of said wrapper, secured to one another in a connecting zone (12).

3. The food assembly according to claim 2,
**characterized in that** the connecting zone (12) of the upper transverse edges (8) of two side faces (5) of the wrapper (1) is separated from the ridge (11) of said edges (8) to arrange, between ridges (11) and connecting zone (12), a gripping zone (10) in which the side faces (5) are able to be individually grasped.

4. The food assembly according to one of claims 2 or 3,
**characterized in that** the upper transverse edges (8) of the two side faces (5) of the wrapper are, in the closed state of said wrapper (1), secured to one another, separately, to go from the closed state to the open state, by simple traction exerted on the side faces (5) of the wrapper in the direction separating said side faces (5).

5. The food assembly according to one of the preceding claims,
**characterized in that** the longitudinal edge (9) of each side face (5) is secured to the longitudinal edge (9) of the side face (5) across from it by a weld (13), said weld (13) preferably being a continuous weld developing along a line substantially parallel to the longitudinal axis of the wrapper (1).

6. The food assembly according to one of the preceding claims,
**characterized in that** the inner face of the opposite side faces (5) of the wrapper (1) is made from a heat-weldable material, preferably polyethylene.

7. The food assembly according to one of the preceding claims,
**characterized in that** the opposite side faces (5) of the wrapper (1) assume the form of a film or a material in a single-layer or multi-layer sheet.

8. The food assembly according to one of the preceding claims,
**characterized in that** the or at least one of the covering plant leaf(s) (4) is a leaf of Batavia lettuce, preferably with dimensions comprised between 12 x 12 cm and 18 x 18 cm.

9. A method for manufacturing a food assembly according to one of claims 1 to 8, using a prefabricated wrapper (1), said method comprising at least one step for preparing the food product (2) and one step for filling the wrapper (1) with the prepared food product (2),
**characterized in that**, during the preparation step of the food product (2), the garnish (3) preconfigured in a roll and the or each covering plant leaf (4) is placed in a template (20) assuming the form of a tubular body open at each of its ends such that the or each covering plant leaf (4) is wound around the garnish (3) inside the template (20), and **in that** during the step for filling the wrapper (1) with the pre-prepared food product (2), the template (20) is axially inserted into the wrapper (1) and **in that** the content of the template (20) is kept inside the package (1) parallel to the removal of the template (20) from the package (1) using a pusher (23).

10. The method according to claim 9, **characterized in that** it comprises, after filling, a step for closing the wrapper (1) by securing upper transverse edges (8) of the wrapper to each other, near the ridge (11) of said edges (8), to arrange an individual gripping zone (10) for the side faces (5) of the wrapper between the ridges (11) and the zone (12).

11. A template (20) for carrying out the manufacturing method according to one of claims 9 or 10, **characterized in that** said template (20) assumes the form of a tubular body open at each of its ends, the peripheral wall of said body being formed by at least two parts (21, 22) movable relative to one another to allow said wall to go from a closed configuration to an open configuration in which it arranges an access opening for accessing the inside of the template body to facilitate filling of said template body.
